# EUROPÄISCHE PATENTANMELDUNG

(11) **EP 3 922 779 A2**
(43) Veröffentlichungstag der Anmeldung: **15.12.2021**
(21) Anmeldenummer: 21167331.4
(22) Anmeldetag: 08.04.2021
(51) Int. Cl.: E04B 1/76, E04C 2/16, E04F 15/18, E04F 15/20, B27N 3/12, B27N 3/18, B27N 7/00, B27N 9/00, B27N 1/00, E04B 1/78, E04B 1/74

(54) **FASERMATTE AUS HOLZFASERN UND THERMOPLASTISCHEM BINDEMITTEL SOWIE VERFAHREN UND VORRICHTUNG ZU DEREN HERSTELLUNG**

(30) Priorität: 28.04.2020 DE 102020205345
(71) Anmelder: GUTEX Holzfaserplattenwerk H. Henselmann GmbH + Co KG, 79761 Waldshut-Tiengen (DE)
(72) Erfinder: Fehrenbach, Ulrich, 79859 Schluchsee (DE); Meyer, Walter Leo, 53639 Königswinter (DE); Bauch, Oliver, 79761 Waldshut (DE)
(74) Vertreter: Grünecker Patent- und Rechtsanwälte PartG mbB

(57) **Zusammenfassung**

Die vorliegende Erfindung betrifft eine Fasermatte aus Holzfasern und thermoplastischem Bindemittel sowie ein Verfahren und eine Vorrichtung zu deren Herstellung. Um eine Fasermatte bereitzustellen, die im Vergleich zu den bekannten Fasermatten eine bessere Formbeständigkeit aufweist und damit vielseitiger einsetzbar ist, umfasst das erfindungsgemäße Verfahren die folgenden Schritte:
a. Schritt A: Bilden eines Faservlieses aus einem Gemisch aus Holzfasern und thermoplastischem Bindemittel.
b. Schritt B: Verbinden des Faservlieses unter Wärmeeinwirkung zu einer thermisch gebundenen Fasermatte (1).
c. Schritt C: Fixieren der Form der Fasermatte (1) in einem Zustand, in welchem die Fasermatte (1) eine Dichte im Bereich von 70 bis 120 kg/m³ aufweist.

Ebenso offenbart die Erfindung eine nach dem Verfahren hergestellte Fasermatte und eine Vorrichtung zur Durchführung des Verfahrens.

## Beschreibung

Die vorliegende Erfindung betrifft eine Fasermatte aus Holzfasern und thermoplastischem Bindemittel sowie ein Verfahren und eine Vorrichtung zu deren Herstellung. Eine solche Fasermatte wird auch als Weichfasermatte oder als flexible Holzfaserdämmstoffmatte bezeichnet.

Bei der Herstellung solcher Fasermatten werden die Holzfasern mit Bindemittel vermischt und das entstehende Gemisch wird anschließend zu einem Faservlies gepresst. Mit den bekannten Anlagen ist es nicht möglich, Fasermatten herzustellen, die für spezielle Anwendungen wie als Trittschalldämmung oder Putzträger (WDVS) eine ausreichende Formbeständigkeit aufweisen. Aufgrund der materialeigenen Rückstellkräfte der Fasern gehen die gepressten Fasermatten nach dem Pressen wieder auf.

Der vorliegenden Erfindung liegt die Aufgabe zugrunde, eine Fasermatte bereitzustellen, die im Vergleich zu den bekannten Fasermatten eine bessere Formbeständigkeit aufweist und damit vielseitiger einsetzbar ist.

Zur Lösung dieser Aufgabe stellt die vorliegende Erfindung das Verfahren nach Anspruch 1, die Vorrichtung nach Anspruch 5 und die Fasermatte nach Anspruch 10 bereit.

Das erfindungsgemäße Verfahren zur Herstellung einer Fasermatte aus Holzfasern und thermoplastischem Bindemittel umfasst die Schritte:
- A: Bilden eines Faservlieses aus einem Gemisch aus Holzfasern und thermoplastischem Bindemittel.
- Schritt B: Verbinden des Faservlieses unter Wärmeeinwirkung zu einer thermisch gebundenen Fasermatte.
- Schritt C: Fixieren der Form der Fasermatte in einem Zustand, in welchem die Fasermatte eine Dichte im Bereich von 70 bis 120 kg/m³ aufweist.

Herkömmliche Weichfasermatten bzw. Standard-Holzfaserdämmmatten weisen eine Dichte im Bereich zwischen 40 und 60 kg/m³ auf. Solche Fasermatten werden im Gefach zum Beispiel zur Wärmedämmung zwischen Ständern in der Wand oder zwischen den Sparren im Dach eingesetzt.

Höhere Dichten ab ca. 70 kg/m³ sind mit bekannten Anlagen in der gebotenen Formbeständigkeit nicht erreichbar, weil die gepresste Fasermatte aufgrund der materialeigenen Rückstellkräfte der Fasern nach dem Pressen wieder aufgeht. Bei den herkömmlichen Vorrichtungen zur Herstellung solcher Fasermatten ist eine ausreichende Formbeständigkeit nicht erreichbar.

Die Rohdichte ist der entscheidende Parameter der erfindungsgemäßen Fasermatte und liegt im Bereich zwischen 70 und 120 kg/m³, vorzugsweise in einem Teilbereich von 70 bis 110 kg/m³ oder einem anderen Teilbereich zwischen 90 und 120 kg/m³. Die erfindungsgemäße Fasermatte ist vorzugsweise homogen, d.h. die Dicke und/oder Dichte der erfindungsgemäßen Fasermatte ist/sind vorzugsweise über deren Länge und Breite konstant.

Das erfindungsgemäße Verfahren ist vorzugsweise ein kontinuierliches Verfahren, bei dem ein kontinuierliches bzw. endloses Faservlies aus einem bevorzugt homogenen Gemisch aus Holzfasern und thermoplastischem Bindemittel durch Pressen erzeugt und thermisch bzw. durch Wärmeeinwirkung zu einer endlosen Fasermatte gebunden wird. Als Holzfasern können z.B. vergütete Holzfasern verwendet werden. Unter vergüteten Holzfasern werden mit Brandschutzmittel (BSM) und Wachs vorbehandelte Holzfasern verstanden. Die diskreten Fasermatten können am Ende des Prozesses durch eine Schneideeinrichtung von dem endlosen Materialstrang abgelängt werden. Das Gemisch aus Holzfasern und Bindemittel wird beispielsweise auf einem umlaufenden Transportband erzeugt und anschließend auf eine nahezu einheitliche Dicke gepresst. Das aus dem Gemisch gebildete und auf konstante Dicke gepresste Faservlies wird danach einer Wärmebehandlung und Kalibrierung bzw. Formfixierung zugeführt. Zum Schluss erfolgt die randseitige Besäumung auf das vorgesehene Längen- und Breitenmaß. Das Gemisch bzw. Faservlies wird vorzugsweise in einer horizontalen Ebene erzeugt und/oder transportiert und/oder wärmebehandelt und/oder kalibriert. Die Dicke des Faservlieses senkrecht zu seiner Erstreckungs- bzw. Transportebene liegt beispielsweise im Bereich von 10 mm bis 320 mm. Die Dicke des Endprodukts richtet sich nach dem jeweiligen Verwendungszweck der Fasermatte und liegt bei Anwendung auf dem Gebiet der Trittschalldämmungen (TSD) beispielsweise im Bereich von 20 mm bis 40 mm, bei Anwendung auf dem Gebiet der Wärmedämmverbundsysteme (WDVS) auf mineralischem Untergrund (z.B. Beton) beispielsweise im Bereich von 100 mm bis 200 mm, bei Anwendung auf dem Gebiet der Wärmedämmverbundsysteme (WDVS) auf Holzständer beispielsweise im Bereich von 60 mm bis 100 mm. Die Breite des Faservlieses in seiner Erstreckungs- bzw. Transportebene (gemessen senkrecht zur Transportrichtung) liegt beispielsweise im Bereich von 1 m bis 5 m, vorzugsweise im Bereich von 2 m bis 4 m, bevorzugt im Bereich von 2,5 m bis 3,5 m. Die Transportgeschwindigkeit des Faservlieses in seiner Erstreckungs- bzw. Transportebene liegt (in Schritt A und/oder in Schritt B) beispielsweise im Bereich von 1 bis 10 Meter/Min. Die Transportgeschwindigkeit des Faservlieses ist vorzugsweise in Schritt A und/oder in Schritt B konstant. Grundsätzlich ist die Transportgeschwindigkeit abhängig von der Dicke der Fasermatte, wobei die Transportgeschwindigkeit mit zunehmender Dicke der Fasermatte abnimmt, sodass für dickere Fasermatten mehr Zeit zur thermischen Behandlung aufgewendet wird.

Vorteilhafte Weiterbildungen der Erfindung sind Gegenstände der abhängigen Ansprüche.

Es kann sinnvoll sein, wenn das Faservlies in Schritt B mit Heißluft durchströmt wird, vorzugsweise in wenigstens zwei Stufen, in denen sich die Temperatur und/oder die Durchströmgeschwindigkeit der das Faservlies durchströmenden Heißluft unterscheidet/unterscheiden, wobei bevorzugt die Temperatur der das Faservlies durchströmenden Heißluft in wenigstens einer der Stufen höher ist als die Schmelztemperatur des thermoplastischen Bindemittels. Die Stufen bzw. Zonen der Heißluftbehandlung liegen vorzugsweise in Transportrichtung des Faservlieses hintereinander und werden z.B. von einem das Faservlies fördernden Transportband nacheinander durchlaufen. Dieser Schritt B wird vorzugsweise in einem sog. Durchströmtrockner durchgeführt, in welchem das Faservlies in seiner Erstreckungsebene gefördert und quer bzw. senkrecht zu seiner Erstreckungsebene mit einem z.B. von Ventilatoren erzeugten Luftstrom durchsetzt wird. Der Luftstrom ist idealerweise über die Länge und/oder Breite des von dem Luftstrom durchströmten Abschnitt des Faservlieses einheitlich. Die Temperatur der Heißluft liegt (in der ersten Stufe und/oder in der zweiten Stufe) vorzugsweise im Bereich von 100 °C bis 180 °C. Bei der Durchströmung mit Heißluft ist das Faservlies vorzugsweise horizontal ausgerichtet, wobei der Luftstrom das Faservlies in vertikaler Richtung, d. h. senkrecht zu der Erstreckungsebene des Faservlieses, durchsetzt, z.B. von unten nach oben oder von oben nach unten. Idealerweise wird das Faservlies während der Durchströmung mit Heißluft in seiner Erstreckungsebene transportiert bzw. gefördert und/oder quer bzw. senkrecht zu seiner Erstreckungsebene gepresst bzw. kalibriert. Vorzugsweise wird das Faservlies nach dem Umluftprinzip mit Heißluft durchströmt, wobei die an einer Seite des Faservlieses (z.B. Unterseite bzw. Oberseite) ausströmende Luft erhitzt und an der anderen Seite des Faservlieses (z.B. Oberseite bzw. Unterseite) wieder zugeführt wird. Dabei zirkuliert die Heißluft in einem in sich geschlossenen und beheizten Kanal.

Es kann sich als nützlich erweisen, wenn das Faservlies in Schritt C zur Kühlung mit Luft durchströmt wird, vorzugsweise mit Umgebungsluft. Durch die Luftstromkühlung wird die im Faservlies gebundene Wärme durch Konvektion an die Kühlungsluft abgegeben und mit dieser abtransportiert. Die Temperatur der zur Kühlung verwendeten Luft liegt vorzugsweise im Bereich von 10 °C bis 30 °C, bevorzugt im Bereich von 15 °C bis 25 °C, besonders bevorzugt im Bereich von 18 °C bis 22 °C. Das Temperaturprofil bzw. die Geschwindigkeit der Abkühlung des Faservlieses kann durch die Temperatur und/oder die Strömungsgeschwindigkeit der zur Kühlung verwendeten Luft gezielt beeinflusst werden. Die Dauer der Durchströmung des Faservlieses mit Luft zur Kühlung ist grundsätzlich abhängig von der Dicke der Fasermatte und steigt mit zunehmender Dicke.

Es kann vorteilhaft sein, wenn das Faservlies in Schritt B und/oder in Schritt C und/oder bei Überführung von Schritt B zu Schritt C auf die Enddicke der Fasermatte kalibriert wird. Vorzugsweise wird das Faservlies beim Aufschmelzen und/oder beim Erstarren des thermoplastischen Bindemittels auf Maß gehalten bzw. kalibriert, d.h. insbesondere bei der Überführung aus einem plastischen bzw. formveränderlichen Zustand, in welchem das thermoplastische Bindemittel sich zumindest teilweise oder vollständig oberhalb dessen Schmelztemperatur befindet und demnach noch keine dauerhafte Verbindung mit den Holzfasern eingegangen ist, in einen formfixierten Zustand, in welchem das thermoplastische Bindemittel auf eine Temperatur unterhalb der Schmelztemperatur abgekühlt ist und mit den Holzfasern eine formschlüssige (und ggf. stoffschlüssige) Verbindung eingeht. Dies führt dazu, dass die materialeigenen Rückstellkräfte des Faservlieses durch das Erstarren des aufgeschmolzenen Bindemittels abgebaut bzw. absorbiert werden. Mit anderen Worten wirkt die erstarrte Faserstruktur des Faservlieses wie ein Skelett, das den materialeigenen Rückstellkräften der Fasern entgegenwirkt und somit die Formveränderung der Fasermatte nach dem Aushärten unterbindet. Um dieses Ziel zu erreichen, erweist es sich als vorteilhaft, wenn die Kerntemperatur des Faservlieses nach dem Durchlaufen der Kühlzone bzw. bei Abschluss des Schrittes C maximal 50 °C, vorzugsweise maximal 40 °C, bevorzugt maximal 30 °C, besonders bevorzugt maximal 25 °C beträgt. Bei der Verwendung einer Bikofaser als thermoplastisches Bindemittel erfüllt die Bikofaser zwei Funktionen, nämlich einerseits die Verklebung der Holzfasern durch die geschmolzene Komponente (Mantel) und andererseits die Festigkeit/Formstabilität durch die nicht geschmolzene Stützfaser (Kern).

Es kann sich als praktisch erweisen, wenn in Schritt C die Form der Fasermatte in einem Zustand fixiert wird, in welchem die Fasermatte wenigstens eines der folgenden Merkmale erfüllt:
- Die Dicke der Fasermatte liegt im Bereich von 10 mm bis 320 mm, im Bereich von 20 mm bis 40 mm (TSD), oder im Bereich von 60 mm bis 100 mm (WDVS mit Holzständer) oder im Bereich von 100 mm bis 200 mm (WDVS auf mineralischem Untergrund wie Beton).
- Die dynamische Steifigkeit der Fasermatte gemäß der Norm EN 29052-1 liegt im Bereich von 5 bis 15 MN/m³.
- Das Brandschutzverhalten der Fasermatte erfüllt die Norm EN13171, vorzugsweise EN13171:2012+A1:2015.
- Die Zusammendrückbarkeit der Fasermatte nach der Norm EN 12431 entspricht in den Dickenklassen T6 oder T7 mindestens Stufe CP5.
- Der Strömungswiderstand AFr der Fasermatte nach der Norm DIN EN 29053 ist größer oder gleich 10 kPa·s/m² (AFr10).

Eine Fasermatte mit diesen Merkmalen ist besonders vielseitig einsetzbar, insbesondere als Putzträgerplatte im Rahmen eines Wärmedämmverbundsystems (WDVS), als Trittschalldämmung, Innendämmung oder Unterdach-, Aufdach-, Flachdachdämmung.

Ein weiterer Aspekt der vorliegenden Erfindung betrifft eine Vorrichtung zur Herstellung einer flexiblen Fasermatte aus Holzfasern und thermoplastischem Bindemittel, vorzugsweise nach dem Verfahren gemäß einem der vorangehenden Ansprüche, umfassend:
- Eine Faserverbindungseinrichtung, welche ausgebildet ist, um ein aus einem Gemisch aus Holzfasern und thermoplastischem Bindemittel gebildetes Faservlies unter Wärmeeinwirkung zu einer thermisch gebundenen Fasermatte zu verbinden.
- Eine Formfixierungseinrichtung, welche ausgebildet ist, um die Form der Fasermatte in einem Zustand zu fixieren, in welchem die Fasermatte eine Dichte (Rohdichte) im Bereich von 70 bis 120 kg/m³ aufweist.

In dem formfixierten Zustand weist die Fasermatte eine ausreichende Formbeständigkeit auf.

Die Faserverbindungseinrichtung ist beispielsweise als Durchströmtrockner ausgebildet. Die Formfixierungseinrichtung ist beispielsweise ein Kalibrierband.

Es kann von Nutzen sein, wenn die Vorrichtung ein Transportband aufweist, auf welchem das Faservlies in einer Transportrichtung durch die Faserverbindungseinrichtung und/oder durch die (bzw. entlang der) Formfixierungseinrichtung transportiert wird, wobei vorzugsweise die Faserverbindungseinrichtung in Transportrichtung eine Gesamtlänge von mehr als 30 m aufweist.

Es kann hilfreich sein, wenn die Faserverbindungseinrichtung wenigstens eine der folgenden Einheiten aufweist:
- Eine erste Heizzone (Trocknereinheit), in welcher das Faservlies mit Heißluft durchströmt wird, vorzugsweise gleichmäßig über die gesamte Länge und/oder Breite des Faservlieses in der ersten Heizzone, wobei bevorzugt die Länge der ersten Heizzone größer ist als 12,5 m.
- Eine zweite Heizzone (Trocknereinheit), in welcher das Faservlies mit Heißluft durchströmt wird, vorzugsweise gleichmäßig über die gesamte Länge und/oder Breite des Faservlieses in der zweiten Heizzone, wobei bevorzugt die Temperatur und/oder Durchströmgeschwindigkeit der das Faservlies durchströmenden Heißluft in der zweiten Heizzone verschieden ist (höher) als in der ersten Heizzone, wobei besonders bevorzugt die Länge der zweiten Heizzone größer ist als 15 m.
- Eine Kühlzone, in welcher das Faservlies mit Luft durchströmt wird, vorzugsweise mit Umgebungsluft, bevorzugt gleichmäßig über die gesamte Länge und/oder Breite des Faservlieses in der Kühlzone, wobei besonders bevorzugt die Temperatur der das Faservlies durchströmenden Luft in der Kühlzone geringer ist als in der ersten Heizzone und/oder in der zweiten Heizzone, wobei ganz besonders bevorzugt die Länge der Kühlzone größer ist als 5 m.

Es kann sich als praktisch erweisen, wenn die Formfixierungseinrichtung ein vorzugsweise höhenverstellbares Kalibrierband aufweist, wobei sich das Kalibrierband bevorzugt in der ersten Heizzone und/oder in der zweiten Heizzone und/oder in der Kühlzone befindet und/oder von der ersten Heizzone in die zweite Heizzone und/oder von der zweiten Heizzone in die Kühlzone und/oder über die Kühlzone hinaus erstreckt. Dadurch kann das Faservlies beim Aufschmelzen und/oder beim Erstarren des thermoplastischen Bindemittels auf Maß gehalten bzw. kalibriert werden.

Noch ein weiterer Aspekt der vorliegenden Erfindung betrifft eine Fasermatte aus Holzfasern und thermoplastischem Bindemittel, vorzugsweise hergestellt nach dem Verfahren gemäß einem der Ansprüche 1 bis 5, wobei die Fasermatte aus einem Faservlies, das aus einem Gemisch aus Holzfasern und thermoplastischem Bindemittel gebildet ist, unter Wärmeeinwirkung thermisch gebunden ist und eine Dichte im Bereich von 70 bis 120 kg/m³ aufweist.

Ein weiterer Aspekt der vorliegenden Erfindung betrifft ein System zum Dämmen von Gebäudebauteilen, umfassend ein flächiges Gebäudebauteil wie beispielsweise einen Boden, eine Decke oder eine Wand, vorzugsweise aus Holz, Beton oder Mauerwerk, und wenigstens eine Fasermatte nach Anspruch 10, wobei die Fasermatte vorzugsweise liegend oder stehend parallel zu dem Gebäudebauteil angeordnet ist, bevorzugt in und/oder auf einem aus Holz gebildeten Gefach. In dieser Ausführung dient die Fasermatte z.B. als Dämmung in einem Wärmedämmverbundsystem (WDVS).

Es kann nützlich sein, wenn die Fasermatte mit Klebstoff an dem Gebäudebauteil befestigt ist, vorzugsweise vollflächig oder mit einer randseitigen Klebenaht und vereinzelten innerhalb der Klebenaht liegenden Klebepunkten. Dadurch kann mit minimalem Klebstoffeinsatz eine feste Verbindung zum Gebäudebauteil erreicht werden.

Es kann sich als vorteilhaft erweisen, wenn die Fasermatte mit wenigstens einem mechanischen Befestigungsmittel an dem Gebäudebauteil befestigt ist, vorzugsweise mit Tellerdübeln, einem Schienensystem oder Breitrückenklammern (Holzuntergründe), insbesondere an einer Gebäudeaußenwand. Dadurch kann einer Ablösung der Fasermatte von dem Gebäudebauteil auch bei starkem Windsog entgegengewirkt werden.

Es kann sinnvoll sein, wenn auf der von dem Gebäudebauteil abgewandten Seite der Fasermatte eine mineralisch oder organisch gebundene Deckschicht angeordnet ist. Diese mineralisch oder organisch gebundene Deckschicht dient als mechanische Schutzschicht und als Barriere gegen Witterungseinflüsse.

Es kann sich als praktisch erweisen, wenn die Deckschicht, eine Estrichschicht oder eine Armierungsputzschicht aus mineralischen oder organischem Armierungsmörtel mit eingebettetem Fasergewebe ist, wobei vorzugsweise auf der von der Fasermatte abgewandten Seite der Armierungsputzschicht eine Außenputzschicht aufgebracht ist. Die Estrichschicht kann als Trockenestrich oder Nassestrich ausgebildet sein. Dieses System eignet sich besonders zur Anwendung als Wärmedämmverbundsystem (WDVS) oder als Trittschalldämmung.

### Begriffe und Definitionen

### Fasermatte, Faservlies

Der Begriff Fasermatte bezeichnet das Endprodukt des erfindungsgemäßen Verfahrens, das durch thermische Verfestigung aus einem Gemisch aus Holzfasern und thermoplastischem Bindemittel hervorgeht. Der Begriff Faservlies bezeichnet ein Zwischenprodukt des erfindungsgemäßen Verfahrens, in welchem das Gemisch aus Holzfasern und thermoplastischem Bindemittel bereits grob die flächige Form der Fasermatte mit vorzugsweise einheitlicher Dicke aufweist, wobei aber diese Form noch veränderlich und noch nicht vollständig fixiert ist. Die Fasermatte ergibt sich demnach aus dem Faservlies durch Formfixierung. Die Begriffe Fasermatte, Weichfasermatte oder Holzfaserdämmstoffmatte werden hierin synonym verwendet, soweit nichts anderes angegeben ist.

### Thermoplastisches Bindemittel

Das thermoplastische Bindemittel kann ein beliebiges Bindemittel mit thermoplastischen Eigenschaften sein. Vorzugsweise werden Kunststofffasern, bevorzugt Bikomponenten (Biko)-Fasern bzw. Bikofasern als thermoplastisches Bindemittel eingesetzt. Bikofasern sind Faserkonstruktionen, die im Kern und im Mantel zwei Komponenten aus unterschiedlichen Rohstoffen enthalten. Diese haben unterschiedliche Eigenschaften, wie z.B. unterschiedliche Erweichungs- und Schmelztemperaturen. Wird auf einen inneren Faserkern mit hoher Schmelztemperatur ein Mantel mit niedriger Schmelztemperatur aufgebracht wie beispielsweise PES/PP, so schmilzt beim Erwärmen nur der Mantel und bildet Verbindungen zwischen den Fasern, während der Kern stabil bleibt. Durch weitere Beimischungen wie Viskosefasern oder Faserstoffe aus nachwachsenden Rohstoffen wie PLA (Polymilchsäure) können vielfältige thermobondierte Vliesstoffe hergestellt werden.

### Putzträger

Putzträger dienen dem festen, dauerhaften Verbund zwischen Untergrund und Putz auf Oberflächen, die sich eigentlich nicht oder nur unzureichend zum Verputzen eignen. Je nach Material übernehmen Putzträgerplatten oder -matten zusätzliche Funktionen wie etwa des Wärme-, Schall- und Brandschutzes. Dies ist insbesondere bei Wärmedämmverbundsystemen (WDVS) der Fall, wo die Platten den Kern des Gesamtsystems darstellen.

### Kurze Beschreibung der Figuren

Es zeigen:
**Fig.** 1 eine schematische, perspektivische Ansicht einer erfindungsgemäßen Fasermatte.
**Fig.** 2 eine schematische Ansicht einer erfindungsgemäßen Vorrichtung zur Herstellung der Fasermatte.
**Fig.** 3 eine schematische Ansicht eines Systems zum Dämmen von Gebäudebauteilen nach einem ersten Ausführungsbeispiel, wobei die erfindungsgemäße Fasermatte als Dämmstoff bzw. Putzträger in einem Wärmedämmverbundsystem eingesetzt wird.
**Fig.** 4 eine schematische Ansicht eines Systems zum Dämmen von Gebäudebauteilen nach einem zweiten Ausführungsbeispiel, wobei die erfindungsgemäße Fasermatte als Dämmstoff bzw. Trittschalldämmung eingesetzt wird.

### Detaillierte Beschreibung der bevorzugten Ausführungsbeispiele

Die bevorzugten Ausführungsbeispiele der Erfindung werden nachstehend mit Bezug auf die beiliegenden Zeichnungen im Detail beschrieben.

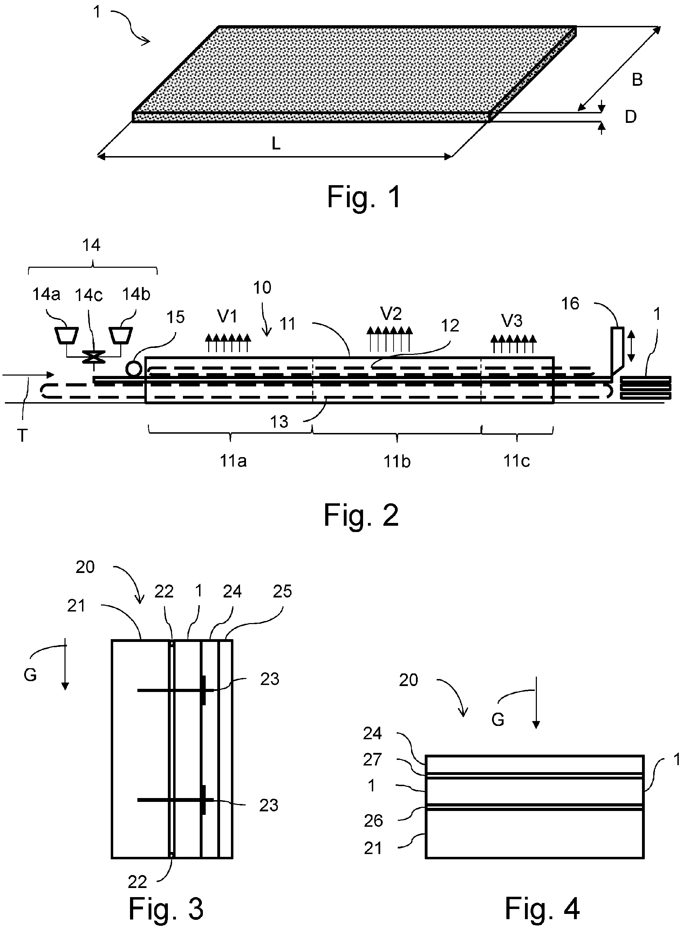

Eine erfindungsgemäße Fasermatte 1 ist in schematischer und perspektivischer Ansicht in Figur 1 dargestellt. Nach dem erfindungsgemäßen Verfahren wird diese Fasermatte 1 in einem ersten Schritt A aus einem Faservlies, das aus einem Gemisch aus Holzfasern und thermoplastischem Bindemittel gebildet ist, unter Wärmeeinwirkung thermisch gebunden und anschließend in einem zweiten Schritt B in einem Zustand formfixiert, in welchem die Fasermatte 1 eine Dichte im Bereich von 70 bis 120 kg/m³ aufweist.

Das erfindungsgemäße Verfahren wird beispielsweise auf der erfindungsgemäßen Vorrichtung 10 ausgeführt, die schematisch in Figur 2 dargestellt ist:
Die erfindungsgemäße Vorrichtung 10 umfasst als Faserverbindungseinrichtung 11 einen Durchströmtrockner 11, der ausgebildet ist, um ein aus einem Gemisch aus Holzfasern und thermoplastischem Bindemittel gebildetes Faservlies in verschiedenen Zonen 11a, 11b, 11c mit Luft V1, V2, V3 zu durchströmen, um das Bindemittel zunächst aufzuschmelzen, sodass dieses mit den Holzfasern verschmilzt, und anschließend abzukühlen, um die Form des Faservlieses zu fixieren. Zusätzlich umfasst die erfindungsgemäße Vorrichtung 10 eine sog. Faserfixiereinrichtung 12 in Gestalt eines umlaufenden Kalibrierbandes 12, das sich über die verschiedenen Zonen 11a, 11b, 11c des Durchströmtrockners 11 hinweg und darüber hinaus erstreckt, um das Faservlies sowohl während der Erwärmung als auch während der Abkühlung auf die Enddicke der Fasermatte 1 zu kalibrieren.

Als thermoplastisches Bindemittel werden beispielsweise Fasern mit einem formstabilen Kern und einem thermoplastisch härtenden Mantel, sogenannte "Bi-Komponenten-Fasern" bzw. "Bikofasern" eingesetzt. Die Bikofasern werden aus einem Bindemittelvorrat 14a über eine Waage dosiert und mit einer entsprechenden Menge trockener Holzfasern aus einem Holzfaservorrat 14b ausgetragen und einer speziellen Mischeinrichtung 14c zugeführt.

Diese Mischung wird aus der Mischeinrichtung 14c auf ein Transportband 13 ausgegeben, sodass auf dem Transportband 13 ein homogenes, flächiges Gemisch entsteht. Ein oberseitiger Materialabtrag, beispielsweise durch einen Kamm, vereinheitlicht die Dicke des Gemisches auf dem Transportband 13. Das Gemisch wird z.B. einer Vorpressewalze 15 zugeführt und dort zu einem endlos geformten Faservlies verdichtet. Durch randseitiges Besäumen des vorgepressten Faservlieses (optional) kann dessen Breite zur Einführung in den nachfolgenden Durchströmtrockner 11 eingestellt werden. Es ist aber auch möglich, dass das randseitige Besäumen der Fasermatte 1 erst nach der Kühlzone erfolgt.

Der kontinuierlich arbeitende Durchströmtrockner 11 umfasst zwei Heizzonen 11a, 11b und eine Kühlzone 11c. In den beiden Heizzonen 11a, 11b wird das Faservlies nach dem Umluftprinzip mit zirkulierender Heißluft auf oberhalb der Schmelz- bzw. Aktivierungstemperatur des thermoplastischen Bindemittels erwärmt. Dabei wird die an der Oberseite des Faservlieses abgesaugte Luft nach Erhitzung wieder an der Unterseite des Faservlieses zugeführt. Es ist auch möglich, dass in den Heißluftzonen die Luft unten am Faservlies abgesaugt wird, dann wieder erwärmt und oberhalb des Faservlieses wieder eingebracht wird. In der Kühlzone 11c härtet das thermoplastische Bindemittel aus, während das Faservlies zwischen dem Transportband 13 und dem Kalibierband 12 auf Enddicke der Fasermatte 1 gehalten wird, und fixiert so die Form der Fasermatte 1.

Die erfindungsgemäße Vorrichtung 10 ist so konstruiert, dass das Kalibrierband 12 das Faservlies zur Herstellung der Fasermatte 1 während des Vernetzungsprozesses des thermoplastischen Bindemittels mit den Holzfasern im Durchströmtrockner 11 auf Endproduktdicke hält. Dazu sind das höhenverstellbare Kalibrierband 12 sowie das Transportband 13 aus einzelnen Lamellen über die gesamte Trocknerlänge installiert. Die erwärmte Heißluft V1, V2 wird in der jeweiligen Heizzone 11a, 11b nach dem Umluftprinzip durch spezielle Ventilatoren, die eine gleichmäßige Luftverteilung bei hohem Druck gewährleisten, in einem geschlossenen Kanal bzw. Kreislauf zirkuliert und dabei durch das Faservlies (und das luftdurchlässige Transportband 13 sowie das luftdurchlässige Kalibierband 12) gedrückt. Die Luft V1, V2 strömt gleichmäßig durch die gesamte Breite und Länge des Faservlieses.

In den Zonen 11a, 11b, 11c des Durchströmtrockners 11 können die Temperatur und Durchströmgeschwindigkeit der Luft einzeln geregelt werden

Während der Verweilzeit im Durchströmtrockner 11 wird die Temperatur in dem Faservlies auf ein Niveau angehoben, das sicherstellt, dass sich das thermoplastische Bindemittel mit den Holzfasern verbindet und eine kompakte Dämmstoffmatte entsteht.

Nach Durchlaufen der beheizten Heizzonen bzw. Trocknereinheiten 11a, 11b gelangt das "heiße" Faservlies in die Kühlzone 11c. Dort wird die Temperatur des Faservlieses mit Kühlungsluft V3 weit unter den Schmelzpunkt des thermoplastischen Bindemittels und die Selbstentzündungstemperatur des Endprodukts abgesenkt.

Die fertige endlose Fasermatte 1 wird aus dem Durchströmtrockner 11 ausgetragen und der Säge- und Stapellinie, hier symbolisiert durch die Schneid- und Stapeleinrichtung 16, zugeführt.

Um eine ausreichende Durchhärtung der Fasermatte 1 zu bewerkstelligen, erweist es sich als vorteilhaft, wenn die erste Heizzone (Trocknereinheit) 11a beispielsweise eine Länge von ≥ 12,5 m und/oder die zweite Heizzone (Trocknereinheit) 11b eine Länge von ≥ 15,0 m aufweist, sodass die Gesamtlänge beider Heizzonen (Trocknereinheiten) 11a, 11b ≥ 27,5 m beträgt.

Die Kühlzone 11c hat vorzugsweise eine Länge von ≥ 5,0 m.

Im Vergleich zu herkömmlichen Vorrichtungen zur Herstellung von Weichfasermatten weist die erfindungsgemäße Vorrichtung insbesondere die folgenden Besonderheiten auf, die eine Herstellung von formstabilen Holzfasermatten im Rohdichtebereich von ca. 70 bis 120 kg/m³ ermöglichen:
Das Kalibrierband 12 der erfindungsgemäßen Vorrichtung 10 erstreckt sich durchgehend durch alle Zonen des Durchströmtrockners 11, einschließlich beider Heizzonen 11a, 11b sowie die daran anschließende Kühlzone 11c, und selbst über die Kühlzone 11c hinaus. Dadurch wird das Faservlies zur Erzeugung der erfindungsgemäßen Fasermatte 1 während des gesamten Vernetzungsprozesses, einschließlich der Erwärmung und Abkühlung des thermoplastischen Bindemittels zur Fixierung der Holzfasern, auf das Endmaß bzw. die Enddicke der Fasermatte 1 kalibriert. Damit wird das Faservlies in der Länge und Breite gleichmäßig durchhärtet und dabei auf Dicke gehalten, während das thermoplastische Bindemittel mit der Holzfaser verschmilzt, sodass es nach dem Aushärten mit den gebundenen Fasern ein formstabiles aber dennoch elastisches verformbares Skelett bildet. Anstelle des einzelnen, durchgehenden Kalibrierband 12 können auch mehrere voneinander getrennte Kalibrierbänder 12 in den jeweiligen Zonen des Durchströmtrockners 11 bzw. im Anschluss an die Kühlzone 11c vorgesehen werden.

Die Kühlzone 11c ist gegenüber herkömmlichen Vorrichtungen derart verlängert, dass die Kerntemperatur des Faservlieses bzw. der Fasermatte 1 beim Verlassen der Kühlzone 11c soweit reduziert ist, dass die verbleibenden, materialeigenen Rückstellkräfte der Fasern vernachlässigbar sind und sich die Form der Fasermatte 1 nicht mehr ändert.

Figur 3 zeigt schematisch und stark vereinfachend ein erfindungsgemäßes System zur Dämmung von Gebäudeteilen, bzw. Wärmedämmverbundsystem (WDVS) nach einem ersten Ausführungsbeispiel der Erfindung, umfassend eine Wand, z.B. aus Ziegel, Kalksandstein, Beton oder Holz, als Gebäudeteil 21, an welcher eine erfindungsgemäße Fasermatte 1 mittels Klebstoff 22 und mechanischen Befestigungsmitteln 23 wie Tellerdübeln stehend (d. h. mit Oberund Unterseiten parallel zur Gewichtskraft) befestigt ist. Bei sehr unebenen Untergründen können Schienensysteme eingesetzt werden, an denen die Fasermatte 1 befestigt werden kann.

Die Fasermatte 1 kann vollflächig oder mit einer randseitig umlaufenden Klebewulst und vereinzelten innerhalb der Klebewulst liegenden Klebepunkten an der Wand 21 verklebt werden. Der Flächenanteil der Verklebung sollte zwischen 40 und 100 Prozent betragen. Die optional zusätzliche mechanische Befestigung der Fasermatte 1 z.B. mit Tellerdübeln 23 vermeidet das Ausbrechen z.B. bei Windsog.

Bei besonders starken Unebenheiten kann die Verankerung der Fasermatte 1 z.B. linienförmig über Metallschienen an der Wand 21 erfolgen. Eine Verklebung kann dann entfallen.

An der von der Wand 21 abweisenden Seite der Fasermatte 1 ist ein Armierungsmörtel oder Unterputz als erste Deckschicht 24 aufgebracht. Je nach der gewünschten zweiten Deckschicht 25, wie z.B. einem Oberputz, werden entweder mineralische oder organische Armierungsmörtel eingesetzt. Die Armierungsschicht 24 besteht aus einem Armierungsmörtel, in den ein Gewebe z.B. aus Glasfaser eingebettet ist, das als Armierungsgewebe im oberen Drittel der Armierungsschicht liegt.

Die zweite Deckschicht 25, z.B. in Gestalt eines Außen- oder Oberputzes, bildet die Außenseite des Systems 20. Auf dieser zweiten Deckschicht kann zusätzlich ein Anstrich (nicht gezeigt) erfolgen.

Figur 4 zeigt schematisch und stark vereinfachend ein weiteres erfindungsgemäßes System 20 zur Dämmung von Gebäudeteilen, bzw. Trittschalldämmung nach einem zweiten Ausführungsbeispiel der Erfindung, umfassend einen Boden/Decke 21, z.B. aus Holz oder Beton, als Gebäudeteil 21, auf welchem eine erfindungsgemäße Fasermatte 1 ggf. unter Zwischenschaltung einer Feuchte-/ Dampfsperre als Sperrschicht 26 liegend (d. h. Ober- und Unterseiten senkrecht zur Gewichtskraft G ausgerichtet) angeordnet ist. Eine Schicht aus Trocken- oder Nassestrich bildet hierbei die Deckschicht 24, wobei vorzugsweise zwischen erfindungsgemäßer Fasermatte 1 und Nassestrich 24 eine Feuchtesperre 27 eingebracht wird.

Weitere vorteilhafte Ausführungsformen und Weiterbildungen der Erfindungen sind im Rahmen des Schutzbereichs der Patentansprüche möglich.

### Bezugszeichenliste

- 1: Fasermatte
- 10: Vorrichtung
- 11: Faserverbindungseinrichtung (Durchströmtrockner)
- 11a: Erste Heizzone (Trocknereinheit)
- 11b: Zweite Heizzone (Trocknereinheit)
- 11c: Kühlzone
- 12: Formfixierungseinrichtung (Kalibrierband)
- 13: Transportband
- 14: Faser- und Bindemittelvorrat
- 14a: Bindemittelvorrat
- 14b: Holzfaservorrat
- 14c: Mischeinrichtung
- 15: Vorpresswalze
- 16: Schneid- und Stapeleinrichtung
- 20: System zur Gebäudedämmung
- 21: Gebäudeteil (Wand, Boden, Decke)
- 22: Klebstoff
- 23: Mechanisches Befestigungsmittel
- 24: Erste Deckschicht (Armierungsputz, Estrich)
- 25: Zweite Deckschicht (Außenputz)
- 26: Sperrschicht
- 27: Feuchtesperre
- B: Breite (Fasermatte)
- D: Dicke (Fasermatte)
- G: Gewichtskraft
- L: Länge (Fasermatte)
- T: Transportrichtung
- V1: Heißluft (Heizzone 1)
- V2: Heißluft (Heizzone 2)
- V3: Kaltluft (Kühlzone)

## Patentansprüche

1. Verfahren zur Herstellung einer Fasermatte (1) aus Holzfasern und thermoplastischem Bindemittel, umfassend die Schritte:
a. Schritt A: Bilden eines Faservlieses aus einem Gemisch aus Holzfasern und thermoplastischem Bindemittel.
b. Schritt B: Verbinden des Faservlieses unter Wärmeeinwirkung zu einer thermisch gebundenen Fasermatte (1).
c. Schritt C: Fixieren der Form der Fasermatte (1) in einem Zustand, in welchem die Fasermatte (1) eine Dichte im Bereich von 70 bis 120 kg/m³ aufweist.

2. Verfahren nach Anspruch 1, **dadurch gekennzeichnet, dass** das Faservlies in Schritt B mit Heißluft durchströmt wird, vorzugsweise in wenigstens zwei Stufen, in denen sich die Temperatur und/oder die Durchströmgeschwindigkeit der das Faservlies durchströmenden Heißluft unterscheidet/unterscheiden, wobei bevorzugt die Temperatur der das Faservlies durchströmenden Heißluft in wenigstens einer der Stufen höher ist als die Schmelztemperatur des thermoplastischen Bindemittels.

3. Verfahren nach einem der vorangehenden Ansprüche, **dadurch gekennzeichnet, dass** das Faservlies in Schritt C zur Kühlung mit Luft durchströmt wird, vorzugsweise mit Umgebungsluft.

4. Verfahren nach einem der vorangehenden Ansprüche, **dadurch gekennzeichnet, dass** das Faservlies in Schritt B und/oder in Schritt C und/oder bei Überführung von Schritt B zu Schritt C auf die Enddicke der Fasermatte (1) kalibriert wird.

5. Verfahren nach einem der vorangehenden Ansprüche, **dadurch gekennzeichnet, dass** in Schritt C die Form der Fasermatte (1) in einem Zustand fixiert wird, in welchem die Fasermatte (1) wenigstens eines der folgenden Merkmale erfüllt:
a. Die Dicke (D) der Fasermatte (1) liegt im Bereich von 10 mm bis 320 mm, vorzugsweise im Bereich von 20 mm bis 40 mm, oder im Bereich von 60 mm bis 100 mm, oder im Bereich von 100 mm bis 200 mm.
b. Die dynamische Steifigkeit der Fasermatte (1) gemäß der Norm EN 29052-1 liegt im Bereich von 5 bis 15 MN/m³.
c. Das Brandschutzverhalten der Fasermatte (1) erfüllt die Norm EN13171, vorzugsweise EN13171:2012+A1:2015.
d. Die Zusammendrückbarkeit der Fasermatte (1) nach der Norm EN 12431 entspricht in den DickenklassenT6 oder T7 mindestens Stufe CP5.
e. Der Strömungswiderstand AFr der Fasermatte (1) nach der Norm DIN EN 29053 ist größer oder gleich 10 kPas/m² (AFr10).

6. Vorrichtung (10) zur Herstellung einer flexiblen Fasermatte (1) aus Holzfasern und thermoplastischem Bindemittel, vorzugsweise nach dem Verfahren gemäß einem der vorangehenden Ansprüche, umfassend:
a. Eine Faserverbindungseinrichtung (11), welche ausgebildet ist, um ein aus einem Gemisch aus Holzfasern und thermoplastischem Bindemittel gebildetes Faservlies unter Wärmeeinwirkung zu einer thermisch gebundenen Fasermatte (1) zu verbinden.
b. Eine Formfixierungseinrichtung (12), welche ausgebildet ist, um die Form der Fasermatte (1) in einem Zustand zu fixieren, in welchem die Fasermatte (1) eine Rohdichte im Bereich von 70 bis 120 kg/m³ aufweist.

7. Vorrichtung nach Anspruch 6, **dadurch gekennzeichnet, dass** die Vorrichtung (10) ein Transportband (13) aufweist, auf welchem das Faservlies in einer Transportrichtung (T) durch die Faserverbindungseinrichtung (11) und/oder durch die Formfixierungseinrichtung (12) transportiert wird, wobei vorzugsweise die Faserverbindungseinrichtung (11) in Transportrichtung (T) eine Gesamtlänge von mehr als 30 m aufweist.

8. Vorrichtung (11) nach Anspruch 7, **dadurch gekennzeichnet, dass** die Faserverbindungseinrichtung (11) wenigstens eine der folgenden Einheiten aufweist:
a. Eine erste Heizzone (11a), in welcher das Faservlies mit Heißluft durchströmt wird, vorzugsweise gleichmäßig über die gesamte Länge und/oder Breite des Faservlieses in der ersten Heizzone (11a), wobei bevorzugt die Länge der ersten Heizzone größer ist als 12,5 m.
b. Eine zweite Heizzone (11b), in welcher das Faservlies mit Heißluft durchströmt wird, vorzugsweise gleichmäßig über die gesamte Länge und/oder Breite des Faservlieses in der zweiten Heizzone (11b), wobei bevorzugt die Temperatur und/oder Durchströmgeschwindigkeit der das Faservlies durchströmenden Heißluft in der zweiten Heizzone (11b) verschieden ist (höher) als in der ersten Heizzone (11a), wobei besonders bevorzugt die Länge der zweiten Heizzone größer ist als 15 m.
c. Eine Kühlzone (11c), in welcher das Faservlies mit Luft durchströmt wird, vorzugsweise mit Umgebungsluft, bevorzugt gleichmäßig über die gesamte Länge und/oder Breite des Faservlieses in der Kühlzone (11c), wobei besonders bevorzugt die Temperatur der das Faservlies durchströmenden Luft in der Kühlzone (11c) geringer ist als in der ersten Heizzone (11a) und/oder in der zweiten Heizzone (11b), wobei ganz besonders bevorzugt die Länge der Kühlzone größer ist als 5 m.

9. Vorrichtung (10) nach einem der Ansprüche 6 bis 8, **dadurch gekennzeichnet, dass** die Formfixierungseinrichtung (12) ein vorzugsweise höhenverstellbares Kalibrierband aufweist, wobei sich das Kalibrierband (12) bevorzugt in der ersten Heizzone (11a) und/oder in der zweiten Heizzone (11b) und/oder in der Kühlzone (11c) befindet und/oder von der ersten Heizzone (11a) in die zweite Heizzone (11b) und/oder von der zweiten Heizzone (11b) in die Kühlzone (11c) und/oder über die Kühlzone (11c) hinaus erstreckt.

10. Fasermatte (1) aus Holzfasern und thermoplastischem Bindemittel, vorzugsweise hergestellt nach dem Verfahren gemäß einem der Ansprüche 1 bis 5, wobei die Fasermatte (1) aus einem Faservlies, das aus einem Gemisch aus Holzfasern und thermoplastischem Bindemittel gebildet ist, unter Wärmeeinwirkung thermisch gebunden ist und eine Dichte im Bereich von 70 bis 120 kg/m³ aufweist.

11. System zum Dämmen von Gebäudebauteilen (21), umfassend ein flächiges Gebäudebauteil (21) wie beispielsweise einen Boden, eine Decke oder eine Wand, vorzugsweise aus Holz, Beton oder Mauerwerk, und wenigstens eine Fasermatte (1) nach Anspruch 10, wobei die Fasermatte (1) vorzugsweise liegend oder stehend parallel zu dem Gebäudebauteil (21) angeordnet ist, bevorzugt in und/oder auf einem aus Holz gebildeten Gefach.

12. System nach Anspruch 11, **dadurch gekennzeichnet, dass** die Fasermatte (1) mit Klebstoff (22) an dem Gebäudebauteil (21) befestigt ist, vorzugsweise vollflächig oder mit einer randseitigen Klebenaht und vereinzelten innerhalb der Klebenaht liegenden Klebepunkten.

13. System nach Anspruch 11 oder 12, **dadurch gekennzeichnet, dass** die Fasermatte (1) mit wenigstens einem mechanischen Befestigungsmittel (23) an dem Gebäudebauteil (21) befestigt ist, vorzugsweise mit Tellerdübeln, einem Schienensystem oder Breitrückenklammern, insbesondere an einer Gebäudeaußenwand.

14. System nach einem der Ansprüche 11 bis 13, **dadurch gekennzeichnet, dass** auf der von dem Gebäudebauteil (21) abgewandten Seite der Fasermatte (1) eine mineralisch oder organisch gebundene Deckschicht (24) angeordnet ist.

15. System nach Anspruch 14, **dadurch gekennzeichnet, dass** die Deckschicht (24) eine Estrichschicht oder eine Armierungsputzschicht aus mineralischen oder organischem Armierungsmörtel mit eingebettetem Fasergewebe ist, wobei vorzugsweise auf der von der Fasermatte (1) abgewandten Seite der Armierungsputzschicht eine Außenputzschicht (26) aufgebracht ist.
